# FASCICULE DE BREVET EUROPEEN

(11) **EP 3 594 601 B1**
(45) Date de publication et mention de la délivrance du brevet: **06.10.2021**
(21) Numéro de dépôt: 19181019.1
(22) Date de dépôt: 18.06.2019
(51) Int. Cl.: F28D 20/02

(54) **SYSTÈME DE STOCKAGE THERMIQUE (SST) PAR MATÉRIAUX À CHANGEMENT DE PHASE (MCP) COMPRENANT UN DISPOSITIF DE CONTRÔLE DE LA CRISTALLISATION PAR INJECTION DE GAZ**
THERMISCHES SPEICHERSYSTEM ANHAND VON PHASENWECHSELMATERIAL (PCM), DAS EINE KONTROLLVORRICHTUNG DER KRISTALLISATION DURCH GASEINSPRITZUNG UMFASST
THERMAL STORAGE SYSTEM (TSS) BY PHASE CHANGE MATERIALS (PCM) COMPRISING A DEVICE FOR CONTROLLING CRYSTALLISATION BY GAS INJECTION

(30) Priorité: 22.06.2018 FR 1855548
(43) Date de publication de la demande: 15.01.2020
(73) Titulaire: Commissariat à l'Energie Atomique et aux Energies Alternatives, 75015 Paris (FR)
(72) Inventeur: BENTIVOGLIO, Fabrice, 38054 GRENOBLE CEDEX 09 (FR); SORIANO, Olivier, 38054 GRENOBLE CEDEX 09 (FR)
(74) Mandataire: Brizio Delaporte, Allison

(56) Documents cités:
- EP-A1- 3 312 539
- DE-A1- 19 731 351
- JP-A- H1 144 494

## Description

### DOMAINE TECHNIQUE DE L'INVENTION

La présente invention concerne les Systèmes de Stockage Thermique (SST) par Matériaux à Changement de Phase (MCP), et plus particulièrement, comprenant un dispositif de contrôle de la cristallisation du MCP par injection de gaz.

La présente invention concerne plus particulièrement un SST par un Matériau à Changement de Phase (MCP) comprenant une cuve destinée à contenir un MCP et éventuellement un ciel de gaz au-dessus du MCP, et au moins un dispositif de contrôle de la cristallisation du MCP. Un SST selon le préambule de la revendication 1 est connu du document JP H 11 44494 A.

Tous les SST utilisant un MCP présentant des problématiques de surfusion et de vitesse de cristallisation lente sont susceptibles d'être concernés par l'invention.

La présente invention trouvera son application dans les réseaux de chaleur et/ou de froid, urbains, ruraux ou industriels ainsi que dans le stockage de l'énergie solaire. L'invention pourra également trouver des applications dans l'habitat, le transport thermique hors réseaux (camions, bateaux...) et le management thermique de systèmes embarqués.

### ÉTAT DE LA TECHNIQUE

Le stockage de chaleur exploitant la chaleur latente de matériaux à changement de phase (MCP), offre l'avantage d'une densité énergétique de stockage élevée (pouvant dépasser 100 kWh/m³) et la possibilité de stocker de la chaleur à haute température en limitant les considérations de tenue à la pression du système (contrairement par exemple aux systèmes de stockage de chaleur en eau pressurisée surchauffée).

Les MCP considérés sont généralement des paraffines, des sels fondus, des sels hydratés ou des eutectiques, qui présentent souvent comme désavantages soit une faible enthalpie de changement d'état (≤170 kJ/kg), soit une toxicité/nocivité pour l'homme ou pour l'environnement, soit une forte corrosivité, soit des propensions à la ségrégation ou à la non-congruence, soit des températures de fusion élevées incompatibles avec l'application à des réseaux de chaleur, soit des prix élevés pour des performances moyennes. Ces inconvénients rendent en l'état leur développement à grande échelle difficilement envisageable et présentent un premier frein au déploiement et à l'exploitation de ces stockages sur des réseaux de chaleur urbains ou industriels.

En réponse à cette problématique, une solution est d'utiliser des polyols, ou sucres alcooliques, et leurs produits dérivés, comme MCP. Outre une bonne, voire très bonne enthalpie de changement d'état (de 200 à 340 kJ/kg, contribuant à la densité énergétique de stockage), ces MCP présentent également de nombreux avantages puisqu'ils sont biosourcés, alimentaires donc non toxiques, non corrosifs, accessibles et bio dégradables.

Toutefois, il a été observé que certains matériaux de cette famille présentent une forte propension à la surfusion c'est-à-dire la capacité d'un matériau à rester à l'état liquide lorsque sa température interne est inférieure à sa température de cristallisation. Cette surfusion se cumule parfois avec une très faible probabilité de cristallisation spontanée, c'est-à-dire la probabilité de générer un cristal à une température donnée et une vitesse de cristallisation très lente, c'est à dire une vitesse de propagation d'un cristal une fois créé. Cette combinaison d'inconvénients est très pénalisante, expliquant en partie pourquoi leur mise en œuvre reste très limitée. La conséquence de ces inconvénients s'observe lors de la phase de décharge du système de stockage, étape au cours de laquelle la cristallisation du MCP est déclenchée pour permettre la restitution de la chaleur stockée par le MCP sous forme latente. Or dans les faits, la forte propension à la surfusion caractéristique des polyols utilisés comme MCP rend cette phase difficilement maitrisable et pose donc une vraie problématique pour leur exploitation.

Dans le cadre du projet de recherche Européen SAM.SSA pour "Sugar Alcohol based Materials for Seasonal Storage Applications", différentes voies pour maitriser la cristallisation de ces types de MCP ont été envisagées.

Certains MCP, par exemple comme les sucres alcooliques et leurs produits dérivés, utilisés pour des applications de stockage de chaleur sont additivés, c'est-à-dire qu'un solvant est ajouté, mélangé, au MCP, de façon à surmonter certains de leur défaut ou inconvénient (surfusion, non-congruence, vieillissement, vitesse de cristallisation...). Cette méthode simplifie la mise en œuvre de ces MCP et conduit même dans certaines situations à permettre tout simplement leur utilisation.

Certains résultats obtenus montrent une accélération de la vitesse de cristallisation toutefois, celle-ci reste encore très faible et aucune étude sur du long terme, sur des grands volumes et intégrant des fonctionnements en cycles, caractéristiques du stockage de chaleur, ne permettent d'envisager sereinement cette voie pour le moment.

Une autre voie concerne le bullage obtenu par l'injection de gaz, notamment de l'air, directement dans le MCP qui produit une agitation et des contraintes de cisaillement conduisant à l'augmentation de la probabilité de la cristallisation spontanée du MCP.

Cette solution présente un inconvénient important. En effet, en pratique on constate que la durée de la décharge, c'est-à-dire la durée de restitution de l'énergie lors du passage de la phase liquide à la phase solide, est relativement importante. Cela limite fortement l'efficacité et les applications pratiques des solutions actuelles reposant sur le bullage.

Les expérimentations menées suivant cette méthode dans le cadre du projet SAM.SSA ont également mis en évidence un temps de latence de l'ordre de 30 minutes entre le début du bullage et le début de la cristallisation.

Tout l'enjeu pour envisager le développement et l'exploitation future de ces stockages exploitant des MCP sujets à la surfusion, notamment des sucres alcooliques, repose donc sur la possibilité de contrôler la cristallisation.

### RÉSUMÉ DE L'INVENTION

Pour atteindre cet objectif, un aspect de la présente invention concerne un système de Stockage Thermique (SST) par Matériau à Changement de Phase (MCP) (2), avantageusement diphasique liquide/solide, comprenant :
- une cuve 1 destinée à contenir un MCP 2 sujet à la surfusion,
- un dispositif de contrôle de la cristallisation du MCP 2.
Le SST comprend un système de circulation plongeant dans la cuve 1, destiné à la circulation d'un fluide caloporteur. Le dispositif de contrôle de la cristallisation du MCP 2 comprend un module d'injection de gaz configuré pour injecter, avantageusement en partie inférieure 10 de la cuve 1, dans le MCP 2, un gaz. La partie inférieure est située verticalement sous un plan horizontal médian de la cuve. Le module d'injection comprend au moins un conduit d'injection 11 comprenant une partie d'extrémité 12 se terminant par une extrémité débouchante 13 dans le MCP 2. Avantageusement, ladite partie d'extrémité présente au moins un point haut, situé verticalement plus haut que l'extrémité débouchante. Avantageusement, l'extrémité débouchante est orientée vers la partie inférieure 10 de la cuve 1.

Le dispositif de contrôle de la cristallisation permet en injectant un gaz dans le MCP de générer un bullage dans le MCP déclenchant ainsi la cristallisation du MCP. Un tel bullage génère une agitation conséquente activant la cristallisation.

L'injection d'un gaz permet donc de manière efficace de contrôler la cristallisation du MCP notamment en améliorant la probabilité de cristallisation spontanée.

Le module d'injection est avantageusement configuré pour améliorer la distribution du gaz et notamment en évitant les risques de bouchage du conduit d'injection lorsque le MCP se solidifie ou également lorsque le MCP est liquide que le module d'injection est à l'arrêt, volontairement durant des phases d'attente pour économiser de l'électricité ou pour piloter la restitution de chaleur ou involontairement en cas d'arrêt accidentel du bullage. L'orientation de l'extrémité débouchante du conduit d'injection vers la partie inférieure de la cuve permet de s'assurer que lors de la solidification du MCP le MCP ne se solidifiera pas dans le conduit d'injection par reflux. La forme de la partie d'extrémité permet de piéger le gaz dans le conduit d'injection évitant ainsi l'entrée de MCP. Avantageusement, la densité du gaz injecté est inférieure à la densité du MCP dans ces deux états par exemple solide et liquide.

Le gaz à l'état gazeux est évacué par un module d'évacuation pour limiter l'augmentation de la pression dans la cuve.

Avantageusement, le système est un système tube calandre.

Ainsi, la présente invention permet d'améliorer significativement les performances des SST puisqu'elle permet de réduire considérablement le temps de cristallisation par bullage.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La FIGURE 1 illustre un système de stockage thermique (SST) selon l'invention.
Les FIGURES 2 à 5 illustrent différents modes de réalisation du module d'injection de gaz selon l'invention. Les FIGURES 2 et 3 illustrent un premier mode de réalisation, la FIGURE 3 étant une vue détaillée d'un seul conduit d'alimentation selon ce premier mode de réalisation. La FIGURE 4 illustre un deuxième mode de réalisation. La FIGURE 5 illustre un troisième mode de réalisation.
La FIGURE 6 illustre une vue en coupe transversale vers la partie inférieure d'une cuve d'un SST selon l'invention.

Les dessins sont donnés à titre d'exemple et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
∘ Avantageusement, le SST comprend au moins un MCP 2 sujet à la surfusion.
∘ Avantageusement, le MCP 2 présente une surfusion correspondant à la différence entre sa température de cristallisation théorique et sa température réelle de cristallisation égale ou supérieure à 2°C;
∘ Avantageusement, ladite partie d'extrémité 12 présente au moins un point haut, situé verticalement plus haut que l'extrémité débouchante 13.
∘ Avantageusement, ladite partie d'extrémité 12 s'étend depuis l'extrémité débouchante 13. Au moins une portion de ladite partie d'extrémité 12 est verticalement plus haute que l'extrémité débouchante 13.
∘ Avantageusement, l'extrémité débouchante 13 est disposée au regard de la partie inférieure 10 de la cuve 1.
∘ Avantageusement, l'extrémité débouchante 13 est disposée au regard d'un fond 21 de la cuve 1.
∘ Avantageusement, le conduit d'injection 11 est coudé.
∘ Avantageusement, le conduit d'injection 11 est coudé de sorte que l'extrémité débouchante 13 soit verticalement située plus bas qu'une autre portion du conduit d'injection 11.
∘ la partie d'extrémité du au moins un conduit d'injection 11 présente un diamètre intérieur dᵢ compris entre 0,1 et 10mm, préférentiellement de 0,5mm.

La diminution de la section, notamment intérieure, du conduit d'injection 11 dans sa partie d'extrémité 12 permet de créer une augmentation de la vitesse du gaz et ainsi d'atteindre un débit satisfaisant sans effort de pompage important. La restriction de section permet donc d'augmenter la vitesse d'injection de gaz sans trop augmenter la perte de charge, car la restriction est réalisée sur une distance faible. Cette perte de charge additionnelle localisée à la restriction de section permet néanmoins une bonne distribution du débit entre plusieurs conduits d'injection si il y en a plusieurs.

Ce dispositif permet également de limiter est probabilité d'introduction du MCP dans le conduit d'injection par l'extrémité débouchante 13.
∘ Avantageusement, le conduit d'injection 11 est incliné par rapport à l'horizontale, par exemple en direction de la partie supérieure 9 de la cuve 1, c'est-à-dire avec la partie d'extrémité 12 orientée en direction de la partie supérieure 9 de la cuve 1, et la partie d'extrémité 12 du conduit d'injection 11 est inclinée avantageusement par rapport au conduit d'injection 11, de sorte que l'extrémité débouchante 13 soit orientée vers la partie inférieure 10 de la cuve 1.
∘ Avantageusement, le conduit d'injection 11 est disposé sensiblement vertical, par exemple en direction de la partie supérieure 9 de la cuve 1 et la partie d'extrémité 12 du conduit d'injection 11 est avantageusement courbée de sorte que l'extrémité débouchante 13 soit orientée vers la partie inférieure 10 de la cuve 1.
∘ Avantageusement, le conduit d'injection 11 est incliné par rapport à l'horizontale, par exemple en direction de la partie inférieure 10 de la cuve 1, c'est-à-dire avec la partie d'extrémité 12 orientée en direction de la partie inférieure 10 de la cuve 1, et la partie d'extrémité 12 du conduit d'injection 11 est alignée avec le conduit de sorte que l'extrémité débouchante 13 soit orientée vers la partie inférieure 10 de la cuve (1).
∘ Avantageusement, le conduit d'injection 11 est disposé sensiblement vertical, par exemple en direction de la partie inférieure 10 de la cuve 1.
∘ Avantageusement, le conduit d'injection 11 est incliné par rapport à la verticale et la partie d'extrémité 12 du conduit d'injection 11 est inclinée de sorte que l'extrémité débouchante 13 soit orientée vers la partie inférieure 10 de la cuve 1.
∘ Avantageusement, le conduit d'injection 11 est disposé sensiblement horizontalement.
∘ Avantageusement, le module d'injection comprend une pluralité de conduits d'injection 11 et au moins un réseau d'alimentation 14 de la pluralité de conduits d'injection 11.
∘ Avantageusement, le module d'injection comprend plusieurs réseaux d'alimentation 14 de la pluralité de conduits d'injection 11.
∘ Avantageusement, le module d'injection comprend de 1 conduit d'injection 11 par tube du système de circulation du fluide caloporteur à 1 conduit d'injection 11 pour 50 tubes du système de circulation du fluide caloporteur.
∘ Avantageusement, un réseau d'alimentation 14 est destiné à alimenter de 1 à 5 conduits d'injection 11.
∘ Avantageusement, l'extrémité débouchante 13 présente un diamètre intérieur dᵢ compris entre 0,1 et 10mm, préférentiellement de 0,1 à 1mm, préférentiellement de 0,5mm.
∘ Avantageusement, le gaz injecté est choisi parmi de l'argon ou de l'azote.
∘ Avantageusement, le gaz injecté est choisi pour maintenir un état gazeux aux températures de changement d'état liquide/solide du MCP. Avantageusement, le gaz injecté est choisi pour limiter les interactions chimiques avec le MCP 2 et avec la cuve 1.
∘ Avantageusement, le système de circulation plongeant dans la cuve 1 comprend un faisceau de tubes 7 destiné à plonger dans le MCP 2 et destiné à la circulation du fluide caloporteur. Les tubes 7 sont avantageusement munis d'ailettes 8 disposées transversalement et destinées à augmenter la surface d'échange du faisceau de tubes entre le fluide caloporteur et le MCP.
∘ Avantageusement, le MCP 2 est choisi parmi les sucres alcooliques, les produits dérivés de sucres alcooliques et des eutectiques, ou un mélange comprenant au moins un sucre alcoolique ou un produit dérivé de sucre alcoolique.
∘ Avantageusement, le MCP 2 est choisi parmi le xylitol, le sorbitol, le mannitol, l'érythritol, l'arabitol, l'adonitol, l'isosorbide et les produits dérivés de l'isosorbide, ainsi que leurs mélanges.
∘ Avantageusement, la cuve 1 comprend un ciel gazeux 16 agencé au-dessus du MCP 2, le ciel gazeux 16 comprend avantageusement au moins un gaz inerte.
∘ Avantageusement, la cuve 1 comprend un module d'évacuation 15 du gaz agencé en partie supérieure 9 de la cuve 1.

Le ciel de gaz 16 est mis en place au-dessus du MCP 2 et permet d'absorber les variations volumiques du MCP 2 au cours des changements de phase liés aux cycles de charge et de décharge du SST. Le gaz inerte présente l'avantage de ne pas réagir avec le MCP 2 pour éviter notamment son oxydation. En outre, la présence du ciel de gaz 16 permet de soutirer le gaz injecté sans entrainer de MCP 2 et permet aussi d'éviter l'entrée d'oxygène dans la cuve 1.
∘ Avantageusement, le SST comprend un réservoir 17 connecté au module d'injection du gaz et recevant avantageusement le gaz à l'état gazeux sous pression de sorte à alimenter le module d'injection.
∘ Avantageusement, le SST comprend un compresseur participant à l'injection du gaz dans la cuve 1.

Pour la suite de la description, on entend par "haut" et "bas", ou leurs dérivés, une qualité de positionnement relatif d'un élément du SST lorsque celui-ci est installé de façon fonctionnelle, le 'haut' étant orienté à l'opposé du sol et le 'bas' étant orienté vers le sol. L'extrémité supérieure se situe en haut et l'extrémité inférieure se situe en bas.

On entend par vertical ce qui est parallèle à la direction de la pesanteur donnée notamment par le fil à plomb et horizontal ce qui est perpendiculaire à la verticale. Le haut et le bas étant opposés verticalement.

On entend par horizontal ce qui est perpendiculaire à la verticale.

L'invention concerne un Système de Stockage thermique (SST). Le stockage de l'énergie thermique permet à la chaleur d'être utilisée en différé. La chaleur peut être stockée sous plusieurs formes. L'invention s'attache au stockage sous la forme de chaleur latente avec l'utilisation de matériaux à changement de phase qui emmagasinent l'énergie à mesure qu'ils changent de phase. Lorsque le matériau atteint sa température de changement de phase, il absorbe une quantité de chaleur pour réaliser la transformation, connue sous le nom de chaleur latente de fusion ou de vaporisation selon le cas. A l'inverse, lorsque le matériau liquide ou gaz est refroidi, il retourne à la phase solide ou liquide en restituant sa chaleur latente.

Bien que la chaleur latente de fusion soit plus faible que la chaleur latente d'évaporation, la transition solide-liquide est la plus prometteuse puisqu'elle permet de limiter l'expansion volumique et ainsi l'augmentation de pression due au changement de phase.

Le SST selon l'invention utilise préférentiellement un MCP 2, ou un mélange de MCP, diphasique, solide/liquide.

Le SST selon l'invention comprend une cuve 1 contenant un MCP 2 et un système de circulation d'un fluide caloporteur plongeant dans la cuve 1. Le système de circulation d'un fluide caloporteur forme un échangeur thermique interne à la cuve 1. L'échangeur thermique interne comprend préférentiellement un faisceau 7 de tubes à ailettes 8 assemblé entre un collecteur supérieur 5 et un collecteur inférieur 6. La cuve 1 est également dénommée calandre, préférentiellement cylindrique pour des raisons de conception mécanique. En fonctionnement, le fluide caloporteur circule à l'intérieur des tubes et échange sa chaleur avec un MCP 2 contenu dans la cuve 1. L'échange thermique se fait sans contact direct. Le fluide caloporteur et le MCP 2 ne sont pas en contact direct.

Avantageusement, la cuve 1 s'étend suivant une direction principale verticale. Avantageusement, l'échangeur thermique interne s'étend suivant une direction verticale, le faisceau 7 de tubes s'étend verticalement entre un collecteur supérieur 5 et un collecteur inférieur 6, préférentiellement disposés aux extrémités supérieure et inférieure de la cuve 1. La cuve est une enceinte, c'est-à-dire qu'elle est close à l'exception des ouvertures décrites.

Le SST fonctionne suivant trois phases majeures : la charge, le stockage et la décharge.
- Une phase dite de charge, durant laquelle le fluide caloporteur cède sa chaleur au MCP 2, entrainant la fusion de celui-ci. La température du fluide est alors supérieure à la température de fusion du MCP 2 et son sens de circulation est préférentiellement vertical descendant.
- Une phase, dite de stockage, au cours de laquelle la circulation du fluide caloporteur est arrêtée et le MCP 2 conserve l'énergie thermique stockée, hors considération des déperditions thermiques avec l'extérieur.
- Une phase dite de décharge durant laquelle le fluide caloporteur circule à une température inférieure à la température de solidification du MCP 2, entrainant la cristallisation du matériau et le réchauffement du fluide caloporteur. Le fluide circule préférentiellement dans le sens vertical ascendant.

L'invention s'applique à tous les MCP sujets au phénomène de surfusion pouvant être cumulé avec une faible probabilité de cristallisation spontanée et/ou une vitesse de cristallisation lente. La surfusion est la capacité du MCP à descendre sous son point de cristallisation tout en restant sous forme liquide. Pour l'invention, un MCP est considéré comme sujet à la surfusion à partir d'un degré de surfusion de 2°C (c'est-à-dire que le MCP peut rester liquide lorsqu'il est amené à une température qui est supérieure de 2°C à sa température théorique de cristallisation), par exemple 5°C, ce qui peut alors empêcher la décharge du SST.

Pour l'invention, la surfusion est calculée comme correspondant à la différence entre la température de cristallisation théorique et la température réelle de cristallisation. La température réelle de cristallisation étant inférieure à la température théorique de cristallisation. Des degrés de surfusion beaucoup plus élevés peuvent également être résolus par l'invention, par exemple, le xylitol peut descendre sans difficulté en surfusion jusqu'à la température ambiante. Compte tenu de sa température de cristallisation considérée entre 93°C et 95°C, le degré de surfusion du xylitol peut être dans ce cas d'environ 70°C.

Préférentiellement, le MCP est choisi parmi les composés organiques et notamment les sucres alcooliques appartenant à la famille des polyols, préférentiellement le sorbitol, le mannitol, le xylitol, le lactitol, l'arabitol, l'adonitol, et l'érythritol, ainsi que leurs mélanges ou les produits dérivés de sucres alcooliques comme l'isosorbide et les produits dérivés de l'isosorbide ou leurs mélanges. Des mélanges des composés organiques peuvent être utilisés. Les MCP ci-dessus listés sont extraits des plantes et peuvent être qualifiés de biosourcés.

Les sucres alcooliques possèdent des valeurs d'enthalpie de phase élevées. On relève ainsi une enthalpie de fusion de 344 J/g pour l'érythritol, de 280 J/g pour le xylitol ou encore 341 J/g pour le mannitol. Ils présentent aussi une grande masse volumique de l'ordre de 1500 kg/m3 (par exemple à l'état solide), ce qui conduit à une densité énergétique très élevée. Ce sont par ailleurs des produits peu coûteux et non toxiques.

De manière caractéristique de l'invention, le SST comprend un dispositif de contrôle de la cristallisation du MCP. Le dispositif de contrôle de la cristallisation comprend un module d'injection d'un gaz dans la cuve 1 directement dans le MCP 2 et préférentiellement en partie inférieure 10 de la cuve 1.

Le gaz injecté n'a pas de fonction de fluide caloporteur. Le gaz injecté est un fluide distinct du fluide caloporteur circulant dans le faisceau de tubes du système de circulation du fluide caloporteur.

Le gaz est choisi parmi de l'azote ou de l'argon. L'azote présente l'avantage d'être un gaz inerte limitant l'oxydation du MCP tout en ayant un coût plus faible que l'argon. Le gaz est tel qu'il reste à l'état gazeux dans les conditions de pression et de température d'utilisation du SST selon l'invention. Le gaz est donc un gaz monophasique dans les conditions de l'invention. L'argon et l'azote satisfont cette condition en présentant des valeurs de températures de liquéfaction très inférieure à 0°C. À titre d'exemple, l'argon ou l'azote qui présentent une température d'ébullition très inférieure à 0°C à la pression atmosphérique (-185,8°C pour l'argon et -195,79°C pour l'azote)

Lors de l'injection de gaz dans le MCP 2, des bulles 18 se forment et créent tout d'abord une agitation mécanique propice à la cristallisation puisque favorisant l'apparition de premiers cristaux et formant ainsi de nombreux sites de nucléation, conduisant par voie de conséquence à augmenter la probabilité de nucléation spontanée. Le gaz étant non miscible avec le MCP 2, cette caractéristique permet aussi de générer des sites de nucléation augmentant la vitesse de restitution de la chaleur. Or, la vitesse de restitution de la chaleur est déterminante pour la puissance du système de stockage. Si la restitution de chaleur est lentement elle limitera la puissance échangée avec le fluide caloporteur. Ainsi, grâce à l'invention, les performances du SST sont améliorées.

Le phénomène de surfusion est alors réduit.

Suivant un mode de réalisation, la cuve 1 du SST comprend un ciel gazeux 16, préférentiellement la pression basse du ciel gazeux 16, c'est-à-dire lorsque le MCP est à l'état solide est de 1 bar de sorte à ne pas endommager les équipements.

Le ciel gazeux 16 comprend avantageusement au moins le gaz injecté par le module d'injection. Préférentiellement, le ciel gazeux comprend au moins un gaz inerte tel que notamment l'azote ou de l'argon, étant toutefois plus coûteux, pour éviter les problèmes de compatibilité avec l'air ambiant de certains MCP tels que les sucres alcooliques qui réagissent avec l'oxygène et s'oxydent.

Avantageusement, la cuve 1 comprend un ciel gazeux 16 disposé au-dessus du MCP 2. Le ciel gazeux 16 se situe entre la surface supérieure du MCP 2 et le plafond 22 de la cuve 1. Le collecteur supérieur 5 et le collecteur inférieur 6 formant respectivement au moins partiellement le plafond 22 de la cuve 1 et le fond 21 de la cuve 1.

Suivant un mode de réalisation préféré, le gaz circule dans le SST en circuit fermé. C'est-à-dire que le gaz injecté en partie inférieure 10 de la cuve remonte vers la partie supérieure de la cuve 9 où il est évacué pour être réutilisé. A cet effet, le SST comprend un module d'évacuation 15 disposé sur la cuve 1 en partie supérieure 9. Le module d'évacuation comprend préférentiellement au moins une valve d'évacuation ou un clapet d'évacuation pouvant être taré, avantageusement relié au module d'injection directement ou indirectement par un réservoir 17.

Préférentiellement, le module d'injection est agencé en partie inférieure 10 de la cuve 1. La partie inférieure 10 et la partie supérieure 9 de la cuve 1 sont définies par les parties de la cuve 1 respectivement situées au-dessous et au-dessus d'un plan médian horizontal séparant en deux parties la cuve1, préférentiellement dans le tiers inférieur de la cuve 1 plus préférentiellement, le module d'injection est disposé à l'extrémité inférieure de la cuve 1, c'est-à-dire à proximité immédiate du fond 21 de la cuve 1 où se situe notamment le collecteur inférieur 6 de l'échangeur thermique interne.

Préférentiellement, le module d'évacuation 15 est agencé en partie supérieure 9 de la cuve 1 plus préférentiellement dans le tiers supérieur de la cuve 1 plus préférentiellement, le module d'évacuation est disposé à l'extrémité supérieure de la cuve 1, c'est-à-dire à proximité immédiate du plafond 22 de la cuve 1 où se situe notamment le collecteur supérieur 5 de l'échangeur thermique interne.

Ces dispositions particulières permettent de prévoir un parcours le plus long possible pour le gaz cheminant dans le MCP 2 contenu dans la cuve 1.

Le SST comprend avantageusement un réservoir 17 de gaz destiné à alimenter le module d'injection. Le réservoir 17 est relié à la cuve 1 par au moins une canalisation 26. La canalisation 26 comprend avantageusement une vanne de régulation 20 destinée à contrôler l'alimentation en gaz. Le gaz est placé à l'état gazeux sous pression, préférentiellement de l'ordre de 10 bars, dans le réservoir 17. Le gaz comprimé présente un volume moindre facilitant son stockage. Le gaz est ensuite injecté à l'état gazeux, préférentiellement sous pression de l'ordre de 2 bars, dans la cuve 1 par le module d'injection. Le gaz est évacué de la cuve 1 à l'état gazeux par le module d'évacuation 15. La canalisation 26 comprend préférentiellement un détendeur 19 configuré pour détendre le gaz comprimé issu du réservoir 17 pour son injection dans la cuve 1.

Selon l'invention, le module d'injection comprend au moins un conduit d'injection 11 destiné à injecter le gaz dans la cuve 1 au contact du MCP 2.

Suivant les modes de réalisations, le module d'injection peut comprendre de 1 conduit d'injection 11 pour un tube de circulation du fluide caloporteur, c'est-à-dire chaque tube du faisceau de tubes 7 du système de circulation du fluide caloporteur, à 1 conduit d'injection 11 pour 50 tubes de circulation du fluide caloporteur. Dans la suite de la description, les détails et dimensions sont donnés pour un seul conduit, mais sont transposables aux autres si le module d'injection comprend une pluralité de conduits d'injection 11.

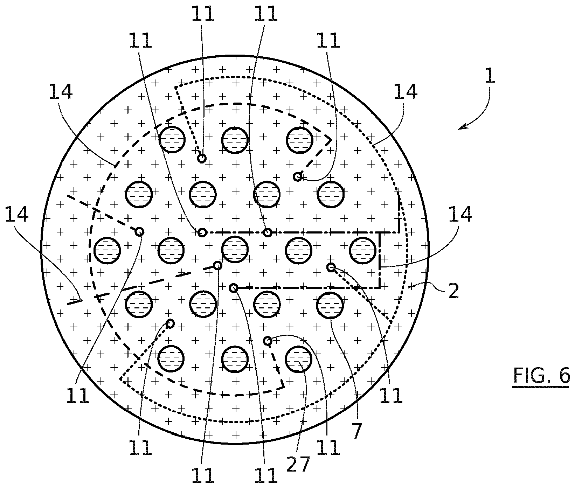

Le SST selon l'invention comprend un réseau d'alimentation 14 agencé dans la cuve 1 configuré pour recevoir le gaz amené par la canalisation 26. Le réseau d'alimentation 14 est configuré pour distribuer le gaz à injecter à un ou plusieurs conduits d'injection 11. Selon l'invention, le réseau d'alimentation 14 est une canalisation sur laquelle est agencé au moins un conduit d'injection 11. Il peut être prévu plusieurs réseaux d'alimentation 14 comme illustrés à la figure 6. La présence d'au moins deux réseaux d'alimentation 14 permet par exemple de contrôler l'injection de gaz de sorte que certains conduits 11 n'injectent pas de gaz ou que les débits de gaz soient différents entre les différents réseaux 14.

En figure 6, la vue en coupe transversale selon la section d'une cuve 1 illustre la présence de quatre réseaux d'alimentation 14 alimentant chacun de 2 à 4 conduits d'injection 11. Les réseaux d'alimentation 14 permettent ainsi une grande souplesse pour disposer au mieux les conduits d'injection sur l'ensemble de la surface d'une section transversale de la cuve 1 et assurer une distribution homogène du gaz au sein du MCP 2.

Le conduit d'injection 11 comprend un corps 24 se poursuivant par une partie d'extrémité 12 se terminant par une extrémité débouchante 13. Selon l'invention, l'extrémité débouchante 13 du conduit d'injection 11 est orientée vers la partie inférieure 10 de la cuve 1, plus spécifiquement l'extrémité débouchante 13 est orientée vers le fond 21 de la cuve 1.

On entend par extrémité débouchante 13 orientée vers la partie inférieure 10 de la cuve 1 que la section de la partie d'extrémité 12 destinée à être au contact du MCP 2 fait face au fond 21 de la cuve. L'extrémité débouchante 13 est soit parallèle au fond 21 de la cuve 1, c'est-à-dire avantageusement horizontale, ou bien peut être inclinée d'un angle inférieur à + ou - 90° par rapport à l'horizontale. C'est-à-dire que l'extrémité débouchante 13 est en face au regard du fond 21 soit est orientée vers les parois latérales de la cuve 1. Cette disposition est particulièrement avantageuse en ce qu'il est important que les conduits d'injection 11 permettent une injection précise et contrôlée tout au long de la phase de décharge pour assurer une décharge rapide et efficace. Ainsi, il faut s'assurer que le MCP 2 en se solidifiant n'endommage pas le module d'injection et en particulier qu'il n'y ait pas de risque de bouchage du conduit d'injection 11. En effet, il a pu être constaté dans certaines conditions que le MCP 2 s'insère dans le conduit d'injection et se solidifie ce qui empêche ensuite l'injection de gaz dans le reste de la cuve 1. L'orientation de l'extrémité débouchante 13 vers la partie inférieure 10 de la cuve 1 assure que le MCP 2 ne pénètre pas dans l'extrémité débouchante 13 évitant ainsi le risque qu'en se solidifiant il bouche la partie d'extrémité 12. Ceci est notamment dû au fait que la densité du MCP 2, que ce soit à l'état liquide ou à l'état solide, est nettement supérieure à la densité du gaz injecté évitant ainsi que le MCP 2 ne pénètre dans le conduit d'injection 11, le gaz est lui piégé. Préférentiellement, le corps 24 du conduit d'injection 11 présente un diamètre intérieur supérieur au diamètre intérieur de la partie d'extrémité 12. A titre d'exemple, le diamètre intérieur du corps 24 est de 5.5 mm et le diamètre intérieur de la partie d'extrémité 12 est de 0.5mm. Avantageusement, la partie d'extrémité 12 présente une distance (non linéaire) entre l'extrémité débouchante 13 et le corps 24 inférieure à la hauteur Hc du corps 24. De cette manière, la perte de charge est limitée, car la restriction est réalisée sur une distance faible.

Ces dispositions contribuent à faciliter l'injection du gaz en générant une accélération du débit du flux de gaz dans le conduit d'injection 11 au niveau de la partie d'extrémité 12 par effet venturi.

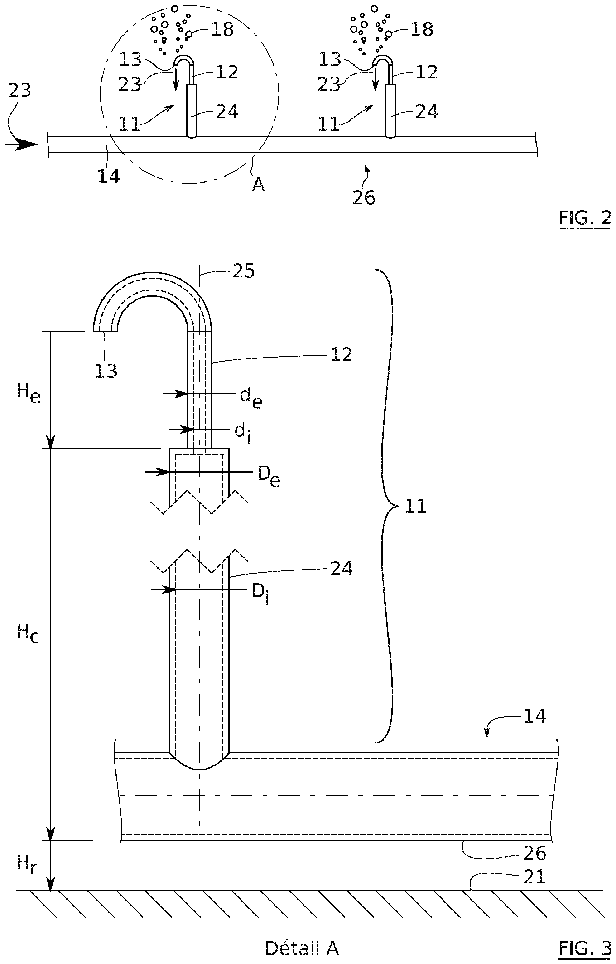

Suivant un premier mode de réalisation illustré aux figures 2 et 3, le conduit d'injection 11, plus précisément le corps 24, est agencé de sorte que son axe longitudinal 25 forme un angle non nul avec l'horizontal. Le conduit d'injection 11 est incliné par rapport à l'horizontale. Suivant une possibilité préférée, le conduit d'injection 11 est agencé verticalement, c'est-à-dire que son axe longitudinal 25 est parallèle à l'axe longitudinal de la cuve 1. Suivant une possibilité alternative dans laquelle le module d'injection comprend une pluralité de conduits d'injection 11, les différents conduits d'injection 11 présentent des inclinaisons différentes par rapport à l'horizontale de sorte que la distribution de gaz dans la cuve 1 est optimisée pour être homogène. Selon ce mode de réalisation, le conduit d'injection 11 est orienté avec sa partie d'extrémité 12 vers la partie supérieure 9 de la cuve 1. La partie d'extrémité 12 est inclinée par rapport au corps 24 de sorte à orienter l'extrémité débouchante 13 vers la partie inférieure 10 de la cuve 1. La partie d'extrémité 12 est par exemple courbée comme sur la figure 2 ou la figure 3 ou bien simplement inclinée.

A titre d'exemple, les indications données ci-après sont des exemples et peuvent être utilisées en combinaison ou seules.
- le corps 24 du conduit d'injection 11 présente une longueur Hc comprise entre 10 et 100mm, par exemple 85mm,
- le corps 24 du conduit d'injection 11 présente un diamètre extérieur De compris entre 5 et 50mm, par exemple 6mm,
- le corps 24 du conduit d'injection 11 présente un diamètre intérieur Di compris entre 0,1 et 49,5mm,
- la partie d'extrémité 12 du conduit d'injection 11 présente une longueur (non linéaire) entre le corps 24 et l'extrémité débouchante 13 comprise entre 10 et 30mm, par exemple 12mm,
- la partie d'extrémité 12 du conduit d'injection 11 présente une hauteur He entre le corps 24 et l'extrémité débouchante 13 comprise entre 10 et 30mm, par exemple 12mm,
la partie d'extrémité 12 du conduit d'injection 11 présente un diamètre intérieur dᵢ compris entre 0.1 et 10mm, par exemple 0.5mm.

Les conduits d'injection 11 des figures 2 ou 3 sont alimentés par un réseau d'alimentation 14. Le réseau d'alimentation 14 comprend au moins une canalisation 26 disposée préférentiellement en partie inférieure 10 de la cuve et encore plus préférentiellement à proximité du fond 21 de la cuve 1. La canalisation 26 est avantageusement sensiblement horizontale et alimente les conduits d'injection 11 à la base du corps 24. La base du corps 24 étant opposée à la partie d'extrémité 12 du conduit d'injection 11.

A titre d'exemple, la canalisation 26 est disposée de 10 à 30 mm du fond 21 de la cuve 1, préférentiellement entre 10 et 20 mm, par exemple 17 mm.

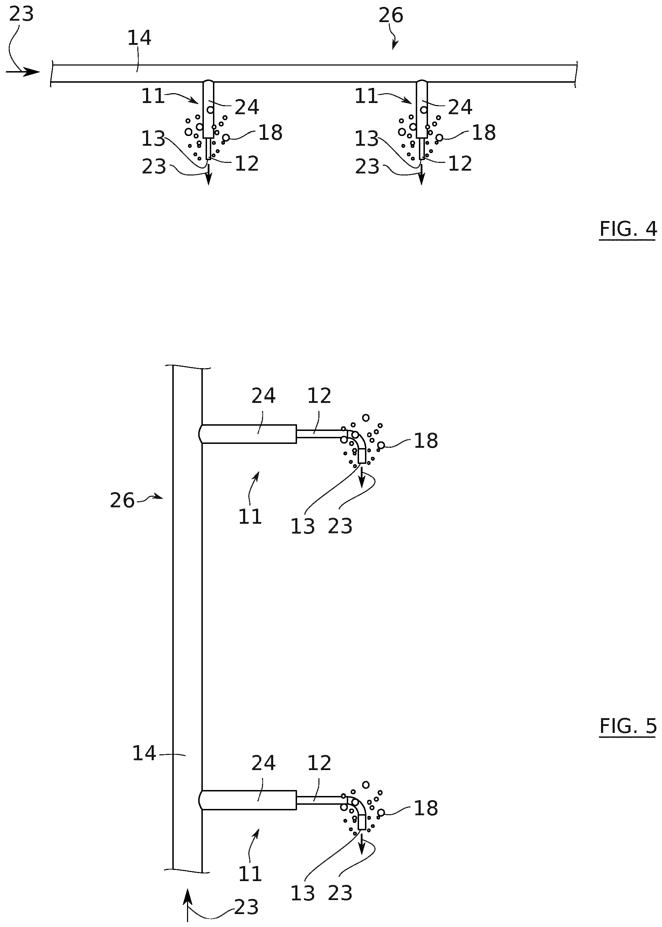

Suivant un deuxième mode de réalisation illustré à la figure 4, le conduit d'injection 11, plus précisément le corps 24, est agencé de sorte que son axe longitudinal 25 forme un angle non nul avec l'horizontal. Le conduit d'injection 11 est incliné par rapport à l'horizontale. Suivant une possibilité préférée, le conduit d'injection 11 est agencé verticalement, c'est-à-dire que son axe longitudinal 25 est parallèle à l'axe longitudinal de la cuve 1. Suivant une possibilité alternative dans laquelle le module d'injection comprend une pluralité de conduits d'injection 11, les différents conduits d'injection 11 présentent des inclinaisons différentes par rapport à l'horizontale de sorte que la distribution de gaz dans la cuve 1 est optimisée pour être homogène. Selon ce mode de réalisation, le conduit d'injection 11 est orienté avec sa partie d'extrémité 12 vers la partie inférieure 10 de la cuve 1. La partie d'extrémité 12 est avantageusement disposée dans le prolongement de l'axe longitudinal 25 du corps 24 de sorte à orienter l'extrémité débouchante 13 vers la partie inférieure 10 de la cuve 1.

Les conduits d'injection 11 de la figure 4 sont alimentés par un réseau d'alimentation 14. Le réseau d'alimentation 14 comprend au moins une canalisation 26 disposée préférentiellement en partie inférieure 10 de la cuve. La canalisation 26 est avantageusement sensiblement horizontale et alimente les conduits d'injection 11 à la base du corps 24. La base du corps étant opposée à la partie d'extrémité 12 du conduit d'injection 11. Suivant ce mode de réalisation, il convient que l'extrémité débouchante 13 se situe à une distance de minimale de5 mm du fond 21 de la cuve 1.

Suivant un troisième mode de réalisation illustré à la figure 5, le conduit d'injection 11, plus précisément le corps 24, est agencé de sorte que son axe longitudinal 25 forme un angle non nul avec la verticale. Le conduit d'injection 11 est incliné par rapport à la verticale. Suivant une possibilité préférée, le conduit d'injection 11 est agencé horizontalement, c'est-à-dire que son axe longitudinal 25 est perpendiculaire à l'axe longitudinal de la cuve 1. Suivant une possibilité alternative dans laquelle le module d'injection comprend une pluralité de conduits d'injection 11, les différents conduits d'injection 11 présentent des inclinaisons différentes par rapport à l'horizontale de sorte que la distribution de gaz dans la cuve 1 est optimisée pour être homogène. Selon ce mode de réalisation, le conduit d'injection 11 est orienté avec sa partie d'extrémité 12 vers la partie inférieure 10 de la cuve 1. La partie d'extrémité 12 est inclinée par rapport au corps 24 de sorte à orienter l'extrémité débouchante 13 vers la partie inférieure 10 de la cuve 1. La partie d'extrémité 12 est par exemple inclinée à 90 ° par rapport au corps 24 comme sur la figure 5 ou peut être courbée.

Les conduits d'injection 11 de la figure 5 sont alimentés par plusieurs réseaux d'alimentation 14. Chaque réseau d'alimentation 14 comprend au moins une canalisation 26 disposée préférentiellement verticalement dans la partie inférieure 10 de la cuve 1. Les canalisations étant avantageusement parallèles entre elles. Chaque canalisation 26 alimente les conduits d'injection 11 à la base du corps 24. La base du corps étant opposée à la partie d'extrémité 12 du conduit d'injection 11.

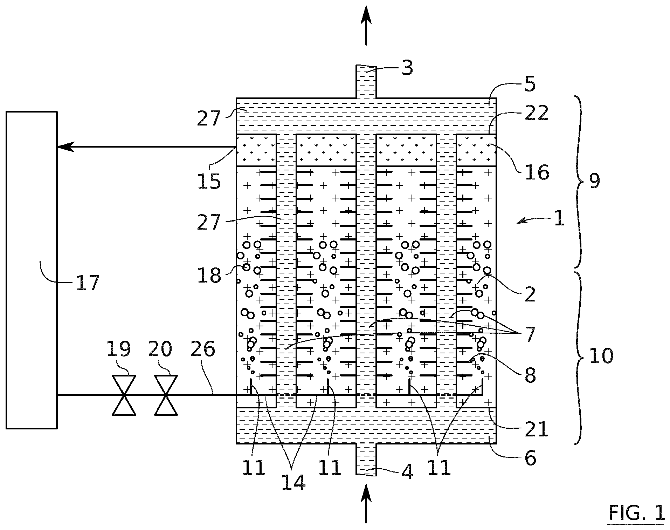

A la figure 1, le SST selon l'invention comprend une cuve 1 contenant un MCP 2, un système de circulation de fluide caloporteur comprenant un faisceau 7 de tubes de circulation du fluide caloporteur plongeant dans la cuve 1 relié à l'extrémité supérieure par un collecteur supérieur 5, et à l'extrémité inférieure par un collecteur inférieur 6 formant respectivement au moins partiellement le plafond 22 de la cuve 1 et le fond 21 de la cuve 1. Le collecteur supérieur 5 est relié à une tubulure 3 d'entrée ou de sortie du fluide caloporteur. Le collecteur inférieur 6 est relié à une tubulure 4 d'entrée ou de sortie du fluide caloporteur.

Le SST comprend également le dispositif de contrôle de la cristallisation comprenant le module d'injection comprenant au moins un conduit d'injection 11, agencé en partie inférieure de la cuve 1. Le SST comprend avantageusement le module d'évacuation 15 comprenant une valve d'évacuation, agencée en partie supérieure de la cuve 1.

La phase de charge dans laquelle le SST charge l'énergie thermique apportée par le fluide caloporteur n'est pas illustrée, elle précède généralement la phase de décharge illustrée à la figure 1. Dans cette phase de charge, le fluide caloporteur circule de haut en bas dans le système de circulation du fluide caloporteur. Le fluide caloporteur pénètre à une première température dans le collecteur supérieur 5 à partir de la tubulure d'entrée 3 qui distribue le fluide au faisceau de tubes 7 plongeant dans le MCP 2 de la cuve 1. En cheminant dans le faisceau de tubes 7 en contact avec le MCP 2, le fluide caloporteur cède de la chaleur au MCP. Le fluide caloporteur ressort de faisceau de tubes 7 par le collecteur inférieur 6 puis est évacué de la cuve 1 par la tubulure de sortie 4. Le fluide ressort à une deuxième température plus faible que la première température. Le MCP 2 qui récupère l'énergie thermique du fluide caloporteur va augmenter en température jusqu'à changer d'état. Classiquement, le MCP 2 passe de l'état solide à l'état liquide lors de la phase de charge.

Pendant cette phase de charge, le changement d'état du MCP ne nécessite pas de contrôle de la cristallisation. De préférence, l'injection de gaz est réduite, voire nulle.

La figure 1 illustre la phase de décharge dans laquelle le SST décharge l'énergie thermique stockée au profit du fluide caloporteur. Dans cette phase, le fluide caloporteur circule de bas en haut dans le système de circulation du fluide caloporteur. Le fluide caloporteur pénètre à une première température dans le collecteur inférieur 6 à partir de la tubulure d'entrée 4 qui distribue le fluide au faisceau de tubes 7 plongeant dans le MCP 2 de la cuve 1. En cheminant dans le faisceau de tubes 7 en contact avec le MCP 2, le MCP cède de la chaleur au fluide caloporteur. Le fluide caloporteur ressort de faisceau de tubes 7 par le collecteur supérieur 5 puis est évacué de la cuve 1 par la tubulure de sortie 3. Le fluide ressort à une deuxième température plus élevée que la première température. Le MCP 2 qui cède l'énergie thermique au fluide caloporteur va diminuer en température jusqu'à changer d'état. Classiquement, le MCP 2 passe de l'état liquide à l'état solide lors de la phase de décharge.

Pendant cette phase de décharge, le changement d'état du MCP 2 se fait par cristallisation et nécessite typiquement un contrôle pour éviter les risques de surfusion notamment. Le gaz est donc injecté dans la cuve 1 par les conduits d'injection 11 directement au contact du MCP 2. Le gaz injecté génère de bulles 18 dans le MCP 2 qui favorisent la formation de cristaux (sites de nucléations) propices à la propagation de la cristallisation du MCP dans le reste de la cuve.

Les conduits d'injection 11 sont disposés entre les tubes 7 du faisceau de tubes de circulation du fluide caloporteur.

Le déplacement du gaz dans le MCP 2 contribue à générer une agitation mécanique au cœur du MCP 2 favorisant la cristallisation et donc permettant d'accélérer la vitesse de cristallisation et/ou une diminution du temps de latence.

Le gaz se retrouve à l'extrémité supérieure 9 de la cuve 1 où il est évacué par une valve d'évacuation du module d'évacuation 15. Préférentiellement, la valve d'évacuation peut être une vanne régulée ou un clapet d'évacuation taré pour une faible pression. La pression correspond à la pression de vapeur saturante du gaz.

Suivant l'invention, le SST permet de mettre en œuvre un procédé de stockage d'énergie thermique par un SST comprenant :
- une phase de charge au cours de laquelle un fluide caloporteur cède sa chaleur à un MCP 2 contenu dans une cuve 1 entrainant la fusion du MCP 2,
- une phase de décharge au cours de laquelle le MCP 2 cède sa chaleur au fluide caloporteur entrainant la cristallisation du MCP et comprenant l'injection dans la partie inférieure 10 de la cuve 1 et vers la partie inférieure 10 de la cuve 1, dans le MCP 2, d'un gaz, par au moins un conduit d'injection 11 comprenant une partie d'extrémité 12 se terminant par une extrémité débouchante 13 dans le MCP 2 orientée vers la partie inférieure 10 de la cuve 1, et l'évacuation du gaz, en partie supérieure 9 de la cuve 1.

À titre d'exemple, non limitatif, un SST selon l'invention présentant une cuve 1 de 2.60 m de haut, comprenant 394 Kg de xylitol utilisé comme MCP. Propriétés du xylitol
- Température de fusion : 93°C
- Enthalpie massique de fusion: 240 kJ/kg
- Densité solide : 1400 kg/m³
- Densité liquide : 1200 kg/m³
- Viscosité dynamique à 93°C : 0,2 Pa.s

Le faisceau de tubes 7 est constitué de 19 tubes en acier à ailettes en radiales hélicoïdales en aluminium.

Le fluide caloporteur circulant dans le faisceau de tubes 7 est de l'eau chaude à une température d'entrée de 110°C à la charge et une température d'entrée pour la décharge de 47°C.

Les débits d'eau de charge et de décharge varient de 110 kg/h à 1200kg/h.

Dans cette configuration ce SST est capable de restituer environ 40 kW.h d'énergie thermique, suivant la durée de stockage et la qualité de l'isolation thermique.

Le gaz choisi est de l'azote. L'air est injecté à un débit de 0.1 à 11 Nl/min.

Le nombre de conduits d'injection est compris entre 1 et 10 points répartis sur la surface d'une section transversale de la cuve.

L'invention n'est pas limitée aux modes de réalisations précédemment décrits et s'étend à tous les modes de réalisation couverts par les revendications.

### REFERENCES

1. Cuve
2. MCP
3. Tubulure de circulation d'entrée ou de sortie du fluide caloporteur
4. Tubulure de circulation d'entrée ou de sortie du fluide caloporteur
5. Collecteur supérieur
6. Collecteur inférieur
7. Faisceau de tubes plongeant dans le MCP
8. Ailettes
9. Partie supérieure de la cuve
10. Partie inférieure de la cuve
11. Conduit d'injection
12. Partie d'extrémité
13. Extrémité débouchante
14. Réseau d'alimentation
15. Module d'évacuation
16. Ciel de gaz
17. Réservoir de gaz
18. Bulles de gaz
19. Détendeur
20. Vanne de régulation
21. Fond de cuve
22. Plafond de cuve
23. Circulation gaz
24. Corps
25. Axe longitudinal
26. Canalisation
27. Fluide caloporteur
De. Diamètre externe corps
Di. Diamètre interne corps
dᵢ. Diamètre interne extrémité débouchante
dₑ. Diamètre externe extrémité débouchante
Hₑ. Hauteur de la partie d'extrémité c'est-à-dire hauteur entre l'extrémité débouchante et le corps
H_{c}. Hauteur corps

## Revendications

1. Système de Stockage Thermique (SST) par Matériau à Changement de Phase (MCP) (2) comprenant :
- une cuve (1) destinée à contenir un MCP (2) sujet à la surfusion,
- un dispositif de contrôle de la cristallisation du MCP (2), comprenant un système de circulation plongeant dans la cuve (1), destiné à la circulation d'un fluide caloporteur et dans lequel le dispositif de contrôle de la cristallisation du MCP (2) comprend un module d'injection de gaz **caractérisé en ce que** le module d'injection de gaz est agencé en partie inférieure (10) de la cuve (1) et configuré pour injecter un gaz, dans le MCP (2), la partie inférieure (10) étant disposée sous un plan horizontal médian de la cuve (1) et le module d'injection comprenant au moins un conduit d'injection (11) comprenant une partie d'extrémité (12) se terminant par une extrémité débouchante (13) dans le MCP (2), ladite partie d'extrémité (12) présente au moins un point haut, situé verticalement plus haut que l'extrémité débouchante (13).

2. SST selon la revendication 1 comprenant au moins un MCP (2) sujet à la surfusion, présentant une surfusion correspondant à la différence entre sa température de cristallisation théorique et sa température réelle de cristallisation égale ou supérieure à 2°C.

3. SST selon l'une quelconque des revendications précédentes dans lequel ladite partie d'extrémité (12) s'étend depuis l'extrémité débouchante (13) et dans lequel au moins une portion de ladite partie d'extrémité (12) est verticalement plus haute que l'extrémité débouchante (13).

4. SST selon l'une quelconque des revendications précédentes dans lequel le conduit d'injection (11) est incliné par rapport à l'horizontale, la partie d'extrémité (12) étant orientée en direction de la partie supérieure (9) de la cuve (1) et inclinée de sorte que l'extrémité débouchante (13) soit orientée vers la partie inférieure (10) de la cuve (1).

5. SST selon l'une quelconque des revendications 1 à 3 dans lequel le conduit d'injection (11) est incliné par rapport à l'horizontale, la partie d'extrémité (12) étant orientée en direction de la partie inférieure (10) de la cuve (1) et alignée avec le conduit de sorte que l'extrémité débouchante (13) soit orientée vers la partie inférieure (10) de la cuve (1).

6. SST selon l'une quelconque des deux revendications précédentes dans lequel le conduit d'injection (11) est disposé sensiblement selon la verticale.

7. SST selon l'une quelconque des revendications 1 à 3 dans lequel le conduit d'injection (11) est incliné par rapport à la verticale et la partie d'extrémité (12) du conduit d'injection (11) est inclinée de sorte que l'extrémité débouchante (13) soit orientée vers la partie inférieure (10) de la cuve (1).

8. SST selon la revendication précédente dans lequel le conduit d'injection (11) est disposé sensiblement horizontalement.

9. SST selon l'une quelconques des revendications précédentes dans lequel le module d'injection comprend une pluralité de conduits d'injection (11) et au moins un réseau d'alimentation (14) de la pluralité de conduits d'injection (11).

10. SST selon l'une quelconque des revendications précédentes dans lequel l'extrémité débouchante (13) présente un diamètre intérieur (dᵢ) compris entre 0,1 et 10mm, préférentiellement de 0,5mm.

11. SST selon l'une quelconque des revendications précédentes dans lequel le gaz injecté est choisi pour présenter un état gazeux aux températures de changement d'état liquide/solide du MCP(2), tel que de l'azote.

12. SST selon l'une quelconque des revendications précédentes dans lequel le système de circulation plongeant dans la cuve (1) (1) comprend un faisceau de tubes (7) destiné à plonger dans le MCP (2) et destiné à la circulation du fluide caloporteur.

13. SST selon l'une quelconque des revendications précédentes dans lequel le MCP (2) est choisi parmi les sucres alcooliques, les produits dérivés de sucres alcooliques, des eutectiques ou un mélange comprenant au moins un sucre alcoolique ou un produit dérivé de sucre alcoolique.

14. SST selon la revendication précédente dans lequel le MCP (2) est choisi parmi le xylitol, le sorbitol, le mannitol, l'érythritol, l'arabitol, l'adonitol, l'isosorbide et les produits dérivés de l'isosorbide, ainsi que leurs mélanges.

15. SST selon l'une quelconque des revendications précédentes dans lequel la cuve (1) comprend un module d'évacuation (15) du gaz agencé en partie supérieure (9) de la cuve (1).

## Patentansprüche

1. Thermisches Speichersystem (SST) anhand von Phasenwechselmaterial (MCP) (2), umfassend:
- eine Wanne (1), die dazu bestimmt ist, ein der Unterkühlung ausgesetztes MCP (2) zu enthalten,
- eine Kontrollvorrichtung der Kristallisation des MCP (2),
umfassend ein Zirkulationssystem, das in die Wanne (1) eintaucht, das zur Zirkulation eines Wärmeträgerfluids bestimmt ist, und wobei die Kontrollvorrichtung der Kristallisation des MCP (2) ein Gaseinspritzmodul umfasst, **dadurch gekennzeichnet, dass** das Gaseinspritzmodul im unteren Teil (10) der Wanne (1) angeordnet ist, und konfiguriert ist, um ein Gas in das MCP (2) einzuspritzen, wobei der untere Teil (10) unter einer horizontalen mittleren Ebene der Wanne (1) angeordnet ist, und das Einspritzmodul mindestens eine Einspritzleitung (11) umfasst, die einen Endteil (12) umfasst, der mit einem Ende abschließt, das in das MCP (2) einmündet (13), wobei der Endteil (12) mindestens einen oberen Punkt aufweist, der sich vertikal höher als das einmündende Ende (13) befindet.

2. SST nach Anspruch 1, mindestens ein der Unterkühlung ausgesetztes MCP (2) umfassend, das eine Unterkühlung aufweist, die dem Unterschied zwischen seiner theoretischen Kristallisationstemperatur und seiner reellen Kristallisationstemperatur größer oder gleich 2°C entspricht.

3. SST nach einem der vorstehenden Ansprüche, wobei sich der Endteil (12) aus dem einmündenden Ende (13) erstreckt, und wobei mindestens ein Abschnitt des Endes (12) vertikal höher als das einmündende Ende (13) ist.

4. SST nach einem der vorstehenden Ansprüche, wobei die Einspritzleitung (11) in Bezug auf die Horizontale geneigt ist, wobei der Endteil (12) in Richtung des oberen Teils (9) der Wanne (1) geneigt ist, und derart geneigt ist, dass das einmündende Ende (13) zum unteren Teil (10) der Wanne (1) ausgerichtet ist.

5. SST nach einem der Ansprüche 1 bis 3, wobei die Einspritzleitung (11) in Bezug auf die Horizontale geneigt ist, wobei der Endteil (12) in Richtung des unteren Teils (10) der Wanne (1) ausgerichtet ist, und derart mit der Leitung bündig ist, dass das einmündende Ende (13) zum unteren Teil (10) der Wanne (1) ausgerichtet ist.

6. SST nach einem der beiden vorstehenden Ansprüche, wobei die Einspritzleitung (11) im Wesentlichen in der Vertikalen angeordnet ist.

7. SST nach einem der Ansprüche 1 bis 3, wobei die Einspritzleitung (11) in Bezug auf die Vertikale geneigt ist und der Endteil (12) der Einspritzleitung (11) derart geneigt ist, dass das einmündende Ende (13) zum unteren Teil (10) der Wanne (1) ausgerichtet ist.

8. SST nach dem vorstehenden Anspruch, wobei die Einspritzleitung (11) im Wesentlichen horizontal angeordnet ist.

9. SST nach einem der vorstehenden Ansprüche, wobei das Einspritzmodul eine Vielzahl von Einspritzleitungen (11) und mindestens ein Versorgungsnetz (14) der Vielzahl von Einspritzleitungen (11) umfasst.

10. SST nach einem der vorstehenden Ansprüche, wobei das einmündende Ende (13) einen Innendurchmesser (dᵢ), der zwischen 0,1 und 10 mm enthalten ist, vorzugsweise von 0,5 mm aufweist.

11. SST nach einem der vorstehenden Ansprüche, wobei das eingespritzte Gas ausgewählt ist, um einen gasförmigen Zustand bei den Zustandswechseltemperaturen flüssig/ fest des MCP (2), wie Stickstoff aufzuweisen.

12. SST nach einem der drei vorstehenden Ansprüche, wobei das Zirkulationssystem, das in die Wanne (1) eintaucht, ein Rohrbündel (7) umfasst, das dazu bestimmt ist, in das MCP (2) einzutauchen, und zur Zirkulation des Wärmeträgerfluids bestimmt ist.

13. SST nach einem der vorstehenden Ansprüche, wobei das MCP (2) aus den alkoholischen Zuckern, den von alkoholischen Zuckern abgeleiteten Produkten, den Eutektika oder einem Gemisch ausgewählt ist, das mindestens einen alkoholischen Zucker oder ein von dem alkoholischen Zucker abgeleitetes Produkt umfasst.

14. SST nach dem vorstehenden Anspruch, wobei das MCP (2) aus Xylitol, Sorbitol, Manitol, Erythritol, Arabitol, Adonitol, losorbid und den Produkten, die vom losorbid abgeleitet sind, sowie deren Gemischen ausgewählt ist.

15. SST nach einem der vorstehenden Ansprüche, wobei die Wanne (1) ein Austragsmodul (15) des Gases umfasst, das im oberen Teil (9) der Wanne (1) angeordnet ist.

## Claims

1. A thermal Storage System (TSS) by Phase Change Material (PCM) (2) comprising:
- a tank (1) intended to contain a PCM (2) subject to supercooling,
- a device for controlling the crystallization of the PCM (2),
comprising a circulation system immersed in the tank (1), intended for the circulation of a heat transfer fluid and wherein the device for controlling the crystallization of the PCM (2) comprises a gas injection module **characterized in that** the gas injection module is arranged in the lower portion (10) of the tank (1) and configured to inject a gas, in the PCM (2), the lower portion (10) being disposed under a median horizontal plane of the tank (1) and the injection module comprising at least one injection conduit (11) comprising an end portion (12) terminating in a through end (13) in the PCM (2), said end portion (12) has at least one high point, located vertically higher than the through end (13).

2. The TSS according to claim 1 comprising at least one PCM (2) subject to supercooling, having a supercooling corresponding to the difference between its theoretical crystallization temperature and its actual crystallization temperature equal to or greater than 2°C.

3. The TSS according to any one of the preceding claims, wherein said end portion (12) extends from the through end (13) and wherein at least one portion of said end portion (12) is vertically higher than the through end (13).

4. The TSS according to any one of the preceding claims wherein the injection conduit (11) is inclined relative to the horizontal, the end portion (12) being oriented towards the upper portion (9) of the tank (1) and inclined such that the through end (13) is oriented towards the lower portion (10) of the tank (1).

5. The TSS according to any one of claims 1 to 3, wherein the injection conduit (11) is inclined relative to the horizontal, the end portion (12) being oriented towards the lower portion (10) of the tank (1) and aligned with the conduit such that the through end (13) is oriented towards the lower portion (10) of the tank (1).

6. The TSS according to any one of the two preceding claims, wherein the injection conduit (11) is disposed substantially according to the vertical.

7. The TSS according to any one of claims 1 to 3, wherein the injection conduit (11) is inclined relative to the vertical and the end portion (12) of the injection conduit (11) is inclined such that the through end (13) is oriented towards the lower portion (10) of the tank (1).

8. The TSS according to the preceding claim, wherein the injection conduit (11) is disposed substantially horizontally.

9. The TSS according to any one of the preceding claims, wherein the injection module comprises a plurality of injection conduits (11) and at least one supply network (14) of the plurality of injection conduits (11).

10. The TSS according to any one of the preceding claims, wherein the through end (13) has an inner diameter (dᵢ) comprised between 0.1 and 10mm, preferably of 0.5mm.

11. The TSS according to any one of the preceding claims, wherein the injected gas is selected to have a gaseous state at the liquid/solid state change temperatures of the PCM (2), such as nitrogen.

12. The TSS according to any one of the preceding claims, wherein the circulation system immersed in the tank (1) comprises a tube bundle (7) intended to be immersed in the PCM (2) and intended for the circulation of the heat transfer fluid.

13. The TSS according to any one of the preceding claims, wherein the PCM (2) is selected from the alcoholic sugars, the products derived from alcoholic sugars, eutectics or a mixture comprising at least one alcoholic sugar or a product derived from alcoholic sugar.

14. The TSS according to the preceding claim, wherein the PCM (2) is selected from xylitol, sorbitol, mannitol, erythritol, arabitol, adonitol, isosorbide and the products derived from isosorbide, as well as the mixtures thereof.

15. The TSS according to any one of the preceding claims, wherein the tank (1) comprises a gas discharge module (15) arranged in the upper portion (9) of the tank (1).
